# EUROPEAN PATENT APPLICATION

(11) **EP 2 315 172 A1**
(43) Date of publication of application: **27.04.2011**
(21) Application number: 10188090.4
(22) Date of filing: 19.10.2010
(51) Int. Cl.: G06Q 30/00, H04L 29/08

(54) **Method for providing content download service and terminal apparatus applying the same**

(30) Priority: 20.10.2009 KR 20090099874
(71) Applicant: Samsung Electronics Co., Ltd., Seoul 442-742 (KR)
(72) Inventor: Kang, Chun-un, Seoul (KR); Lee, Hyo-gun, Seoul (KR); Kim, Ki-ho, Gyeonggi-do (KR)
(74) Representative: Rooney, John-Paul

(57) **Abstract**

A method for providing a content download service and a terminal apparatus (100) applying the method are provided in which the terminal apparatus (100) transmits terminal apparatus information to a first server (120), the first server (120) transmits the received terminal apparatus information to a second server (140), and the second server (140) receives a download request for predetermined content based on the received terminal apparatus information. Therefore, it is possible for a user to access the second server and check the terminal apparatus information, even though the terminal apparatus is powered off.

## Description

### CROSS-REFERENCE TO RELATED APPLICATIONS

This application claims priority from Korean Patent Application No. 10-2009-00099874, filed on October 20, 2009, in the Korean Intellectual Property Office, the disclosure of which is incorporated herein by reference in its entirety.

### BACKGROUND

### 1. Field

Apparatuses and methods consistent with the exemplary embodiments relate to a method for providing a content download service and a terminal apparatus applying the method. More particularly, apparatuses and methods consistent with the exemplary embodiments relate to a method for providing a content download service in order that a terminal apparatus may download content purchased by a user using another terminal apparatus, and a terminal apparatus applying the method.

### 2. Description of the Related Art

Recently, websites for selling content such as applications through application stores are increasing. Accordingly, not only content providers, but also individuals can create their own content and sell the content through application store websites. Additionally, users typically download content via the Internet to use the content.

Accordingly, a user may purchase content using a first terminal apparatus and download the content using another terminal apparatus. For example, if a user desires to give content as a gift to another user, he or she may purchase and download the content using different terminal apparatuses. Additionally, a user may purchase content using his or her office computer, and may download the content using a television (TV) in their home.

However, if a terminal apparatus used for the purchase of content is different from a terminal apparatus used for the download of content, it can be difficult for users to know information regarding the terminal apparatus used to download the content. For example, if a terminal apparatus used to download content is powered off, it is impossible not only to know information on the terminal apparatus for download of content, but it may also be impossible to download content. Therefore, there is a need for methods for users to know information on a terminal apparatus used to download content although the terminal apparatus used to download content is powered off when a terminal apparatus used to purchase content is different from the terminal apparatus used to download the content.

### SUMMARY OF THE EXEMPLARY EMBODIMENTS

Exemplary embodiments overcome the above disadvantages and other disadvantages not described above. Also, the exemplary embodiments are not required to overcome the disadvantages described above, and an exemplary embodiment may not overcome any of the problems described above.

Exemplary embodiments provide a method for providing a content download service, in which a terminal apparatus transmits terminal apparatus information to a first server, the first server transmits the received information to a second server and the second server receives a request to download predetermined content based on the received information, and provide the predetermined content to a terminal apparatus by applying the method.

According to an aspect of the exemplary embodiments, there is provided a method for providing a content download service in a content download system comprising a first server, a second server and a terminal apparatus which are communicable to each other, the method comprising the terminal apparatus transmitting terminal apparatus information to the first server, the first server transmitting the received terminal apparatus information to the second server, the second server receiving a download request to download a predetermined content based on the received terminal apparatus information, the second server transmitting the download request to the terminal apparatus, and the terminal apparatus downloading the predetermined content in response to the download request.

The transmitting, by the second server, may comprise the second server transmitting the download request to the terminal apparatus at regular intervals until the terminal apparatus responds to the download request, if it is impossible to communicate with the terminal apparatus.

The receiving may comprise the second server receiving the download request along with a purchase request to purchase the predetermined content from another terminal apparatus. The transmitting, by the second server, may comprise the second server transmitting the download request to the terminal apparatus, if purchase of the predetermined content is complete in the second server.

The transmitting, by the terminal apparatus, may comprise the terminal apparatus transmitting the terminal apparatus information to the first server at regular intervals.

The transmitting, by the terminal apparatus, may comprise the terminal apparatus transmitting the terminal apparatus information to the first server whenever the terminal apparatus information is changed.

The transmitting, by the first server, may comprise the second server sending a retrieval request to retrieve the terminal apparatus information to the first server, if it is impossible to communicate with the terminal apparatus; and the first server transmitting the terminal apparatus information to the second server in response to the retrieval request.

The terminal apparatus information may comprise at least one of model information, serial number information, firmware version information, screen size information, memory available space information, codec information, definition information, download option information, and download lock setting information which are associated with the terminal apparatus, but is not limited thereto.

The first server may store and manage information regarding a plurality of terminal apparatuses, and may provide the stored information to external devices.

The second server may be a web server which provides a website for selling a variety of paid content or providing content free of charge, using the terminal apparatus information.

The transmitting, by the second server, may comprise the second server transmitting the download request along with download authority information for the predetermined content to the terminal apparatus.

The downloading may comprise the terminal apparatus downloading the predetermined content from a content provider.

The method may further comprise the second server transmitting the terminal apparatus information to another terminal apparatus.

The transmitting, by the second server, may comprise the second server transmitting the download request to a third server which manages product information, and the third server transmitting the download request to the terminal apparatus.

According to another aspect of the exemplary embodiments, there is provided a terminal apparatus, which is communicable with a server, comprising a communication unit which is communicably connected to the server, and a controller which controls the terminal apparatus to transmit terminal apparatus information to the server.

If a download request to download a predetermined content is received from an external server, the controller may control the communication unit to download the predetermined content.

The controller may control the terminal apparatus to transmit the terminal apparatus information to the server at regular intervals.

If the terminal apparatus information is changed, the controller may control the terminal apparatus to transmit the changed terminal apparatus information to the server.

The terminal apparatus information may comprise at least one of model information, serial number information, firmware version information, screen size information, memory available space information, codec information, definition information, download option information, and download lock setting information which are associated with the terminal apparatus, but is not limited thereto.

The terminal apparatus may be a television (TV), but is not limited thereto.

### BRIEF DESCRIPTION OF THE DRAWINGS

The above and/or other aspects will be more apparent by describing certain exemplary embodiments with reference to the accompanying drawings, in which:

FIG. 1 is a block diagram of a content download system according to an exemplary embodiment;

FIG. 2 is a block diagram of a content download system comprising a PMS according to another exemplary embodiment;

FIG. 3 is a flowchart explaining a method for providing a content download service according to an exemplary embodiment;

FIG. 4 is a flowchart explaining an operation of a terminal apparatus according to an exemplary embodiment;

FIG. 5 is a flowchart explaining an operation of a hub site according to an exemplary embodiment;

FIG. 6 is a flowchart explaining an operation of a web server according to an exemplary embodiment;

FIG. 7 is a block diagram of a terminal apparatus according to an exemplary embodiment; and

FIGS. 8A to 8E are views illustrating a content download process of a content download system according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail. Expressions such as "at least one of, " when preceding a list of elements, modify the entire list of elements, and do not modify the individual elements of the list.

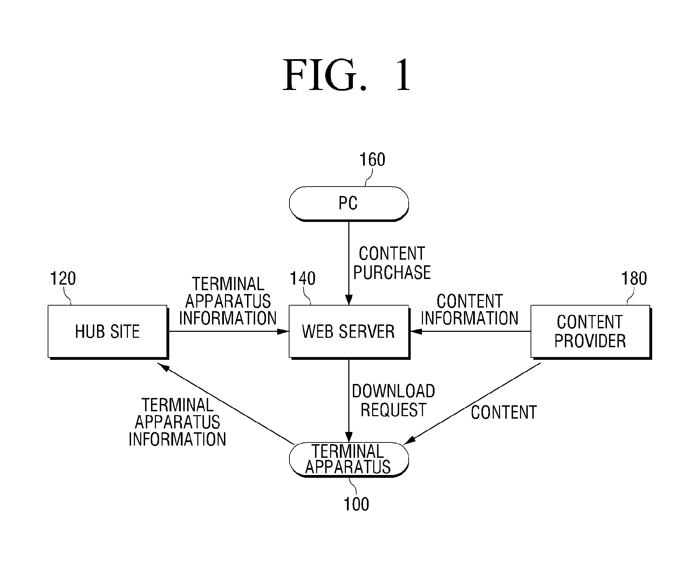

FIG. 1 is a block diagram of a content download system according to an exemplary embodiment. In FIG. 1, the content download system comprises a terminal apparatus 100, a hub site 120, a web server 140, a personal computer (PC) 160, and a content provider 180.

The terminal apparatus 100 may be a multimedia apparatus which enables a user to use a variety of content. The terminal apparatus 100 is communicably connected to various servers via the Internet or other wired or wireless communication networks. As shown in FIG. 1, the terminal apparatus 100 is communicably connected to the hub site 120, the web server 140 and the content provider 180. The hub site may be implemented as a server.

The terminal apparatus 100 transmits its information (hereinafter, referred to as 'terminal apparatus information') to the hub site 120. Herein, the terminal apparatus information comprises information regarding the specification of the terminal apparatus 100, and information regarding the current status of the terminal apparatus 100. In more detail, the terminal apparatus information may comprise at least one of model information, serial number information, firmware version information, screen size information, memory available space information, codec information, definition information, download option information, and download lock setting information which are associated with the terminal apparatus 100, but is not limited thereto.

The model information is information assigned to the terminal apparatus 100 according to the specification of the terminal apparatus 100 by a manufacturer of the terminal apparatus 100. Accordingly, the model information may comprise information required to specify the type and function of the terminal apparatus 100.

The serial number information indicates serial numbers assigned for each terminal apparatus to identify terminal apparatuses. Accordingly, the serial number information may be used to distinguish the terminal apparatus 100 from other terminal apparatuses.

The firmware version information indicates a version of firmware installed in the terminal apparatus 100.

The screen size information indicates a size of a screen of a display included in the terminal apparatus 100. For example, the screen size information may be represented by an inch, such as 3.5 inches, 4 inches or 40 inches, and may be stored. The screen size information may be used to determine an appropriate size of moving images or photographic content.

The memory available space information is information regarding available storage space in a memory included in the terminal apparatus 100. The memory available space information is contained in the terminal apparatus information, and thus it is possible for a user to determine how much free space is left in the terminal apparatus 100 by accessing the web server 140.

The codec information is information regarding a codec supported by the terminal apparatus 100. The codec information may be used when a compressed moving image is played back. Accordingly, the codec information is contained in the terminal apparatus information, and thus it is possible for a user to identify which codec is used to play back a moving image in the terminal apparatus 100 by accessing the web server 140.

The definition information refers to a definition of the display in the terminal apparatus 100, and may be, for example, 320*240, 640*480 and 1920*1080. The definition information is contained in the terminal apparatus information, and thus it is possible for a user to identify which definition is available in the terminal apparatus 100 by accessing the web server 140.

The download option information is information regarding download options set in the terminal apparatus 100 by a user. For example, the download option information may comprise information on download speed restriction or a download folder.

The download lock setting information is information regarding the state of 'download lock' which is set in the terminal apparatus 100 by a user. The download lock may be set according to each type of content. Additionally, the web server 140 may prevent a user from purchasing content on which the download lock is set in the terminal apparatus 100. For example, if the download lock is set on adult content in the terminal apparatus 100, information regarding download lock on the adult content may be contained in the download lock setting information. Accordingly, after receiving the terminal apparatus information, the web server 140 may prevent the adult content from being downloaded.

As described above, the terminal apparatus information may comprise a variety of information associated with the specification and current status of the terminal apparatus 100.

The terminal apparatus 100 may transmit the terminal apparatus information to the hub site 120 in various ways. In this situation, the terminal apparatus information may be transmitted at regular intervals, for example every 1 hour.

Additionally, if the terminal apparatus information is changed, the terminal apparatus 100 may transmit the changed apparatus information to the hub site 120. For example, if the available storage space of the memory is changed due to deletion or addition of content, the terminal apparatus 100 may transmit the changed terminal apparatus information to the hub site 120.

Furthermore, the terminal apparatus 100 may receive a download request from the web server 140. Herein, the download request refers to a message related to a request to download predetermined content which is purchased by a user of the PC 160 through the web server 140. In more detail, the download request may comprise download path information required to download the predetermined content. Additionally, the download request may further comprise download authority information which enables the terminal apparatus 100 to download the predetermined content.

The terminal apparatus 100 downloads predetermined content from the content provider 180 using the download request received from the web server 140. In more detail, if the terminal apparatus 100 sends the download request for the predetermined content to the content provider 180, the content provider 180 may transmit the predetermined content to the terminal apparatus 100 in response to the download request. Accordingly, the terminal apparatus 100 may download the predetermined content from the content provider 180.

The hub site 120 stores and manages apparatus information of a plurality of terminal apparatuses, and provides the stored apparatus information to external devices. In more detail, the hub site 120 may receive the terminal apparatus information from the terminal apparatus 100, may store and manage the received apparatus information, and may transmit the stored terminal apparatus information to the web server 140. Additionally, if a retrieval request to retrieve the terminal apparatus information is received from the web server 140, the hub site 120 may transmit the terminal apparatus information to the web server 140 in response to the request.

As described above, the terminal apparatus information is stored in the hub site 120, and so the hub site 120 may transmit the terminal apparatus information to the web server 140 even though it is impossible to communicate with the terminal apparatus 100 because the terminal apparatus 100 is powered off.

The web server 140 may be a server which provides a content sale website which sells a variety of paid content or provides content free of charge. The web server 140 supports a function of giving a content gift to another terminal apparatus through the content sale website. More specifically, the web server 140 may provide a gift function, which enables a user to purchase predetermined content from the content sale website using the PC 160 and to download the purchased content using the terminal apparatus 100. Herein, the term 'gift function' is used merely for convenience of description, and thus there is no limitation to such a term.

Accordingly, the user may access the content sale website provided by the web server 140, and may purchase predetermined content using the PC 160, so that the terminal apparatus 100 may download the predetermined content.

The web server 140 receives content information regarding sellable content from the content provider 180. Additionally, the web server 140 combines the received content information with information regarding the content sale website.

The web server 140 receives from the PC 160 a purchase request and a download request for predetermined content, based on the terminal apparatus information. If the user completely purchases the predetermined content using the PC 160, the web server 140 may transmit the download request for the predetermined content to the terminal apparatus 100.

In this situation, if it is impossible to communicate with the terminal apparatus 100, the web server 140 continues to transmit the download request to the terminal apparatus 100 at regular intervals until the terminal apparatus 100 responds to the download request.

Moreover, when it is impossible to communicate with the terminal apparatus 100, if a retrieval request to retrieve the terminal apparatus information is received from the PC 160, the web server 140 requests the hub site 120 to retrieve the terminal apparatus information. Subsequently, the web server 140 receives the terminal apparatus information from the hub site 120, and then provides the received apparatus information to the PC 160.

The web server 140 may also transmit the download authority information along with the download request to the terminal apparatus 100. Herein, the download authority information enables the terminal apparatus 100 to download the predetermined content.

As described above, the web server 140 may provide the content sale website which sells a variety of paid content or provides content free of charge. In addition, the web server 140 may receive the terminal apparatus information from the hub site 120, and may then send the received apparatus information to the PC 160, even though it is impossible to communicate with the terminal apparatus 100.

The PC 160 is used to access the web server 140 and purchase content through the content sale website. Accordingly, it is possible for a user of the PC 160 to access the content sale website provided by the web server 140 using the PC 160, and to purchase desired content or to give a content gift to the terminal apparatus 100.

The content provider 180 may a server, which stores and manages content and provides the content over the Internet. The content provider 180 provides content information to the web server 140, and transmits content to the terminal apparatus 100. In more detail, if a request to download predetermined content is received from the terminal apparatus 100, the content provider 180 may transmit the predetermined content to the terminal apparatus 100.

Through the process described above, the content download system may provide a content download service, so that the predetermined content purchased through the PC 160 may be downloaded to the terminal apparatus 100. Additionally, the terminal apparatus information is stored in and provided by the hub site 120, and thus the content download system may make it possible to purchase content through the PC 160 and download the content to the terminal apparatus 100, even though the terminal apparatus 100 is in an incommunicable state. In other words, if it is impossible to communicate with the terminal apparatus 100, the content download system may purchase and download content in an asynchronous manner, that is, in a predetermined time interval, rather than in real-time.

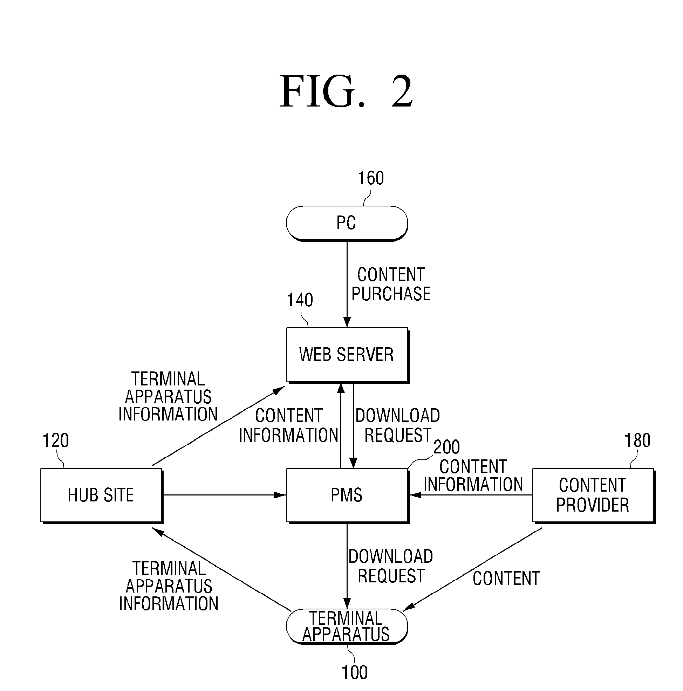

FIG. 2 is a block diagram of a content download system comprising a product management server (PMS) according to another exemplary embodiment. The content download system shown in FIG. 2 comprises a terminal apparatus 100, a hub site 120, a web server 140, a PC 160, a content provider 180 and a PMS 200.

The terminal apparatus 100 is a multimedia apparatus which enables a user to use a variety of content. The terminal apparatus 100 is communicably connected to various servers via the Internet or other wired or wireless communication networks. As shown in FIG. 2, the terminal apparatus 100 is communicably connected to the hub site 120, the content provider 180 and the PMS 200.

The terminal apparatus 100 transmits terminal apparatus information to the hub site 120. Herein, the terminal apparatus information comprises information regarding the specification of the terminal apparatus 100, and information regarding the current status of the terminal apparatus 100. In more detail, the terminal apparatus information may comprise at least one of model information, serial number information, firmware version information, screen size information, memory available space information, codec information, definition information, download option information, and download lock setting information which are associated with the terminal apparatus 100, but is not limited thereto.

The terminal apparatus 100 may transmit the terminal apparatus information to the hub site 120 in various ways. In this situation, the terminal apparatus information may be transmitted at regular intervals, for example every 1 hour.

Additionally, if the terminal apparatus information is changed, the terminal apparatus 100 may transmit the changed apparatus information to the hub site 120. For example, if the available storage space of the memory is changed due to deletion or addition of content, the terminal apparatus 100 may transmit changed terminal apparatus information to the hub site 120.

Furthermore, the terminal apparatus 100 may receive a download request from the PMS 200. Herein, the download request may refer to a message related to a request to download predetermined content which is purchased by a user of the PC 160 through the web server 140. In more detail, the download request may comprise download path information required to download the predetermined content, and download authority information which enables the terminal apparatus 100 to download the predetermined content. The download request is transmitted from the web server 140 to the terminal apparatus 100 through the PMS 200.

The terminal apparatus 100 downloads predetermined content from the content provider 180 using the download request received from the PMS 200. In more detail, if the terminal apparatus 100 sends the download request for the predetermined content to the content provider 180, the content provider 180 may transmit the predetermined content to the terminal apparatus 100 in response to the download request. Accordingly, the terminal apparatus 100 may download the predetermined content from the content provider 180.

The hub site 120 stores and manages apparatus information of a plurality of terminal apparatuses, and provides the stored apparatus information to the outside of the terminal apparatus 100. In more detail, the hub site 120 may receive the terminal apparatus information from the terminal apparatus 100, may store and manage the received apparatus information, and may transmit the stored terminal apparatus information to the web server 140 and the PMS 200. Additionally, if a retrieval request to retrieve the terminal apparatus information is received from the web server 140, the hub site 120 may transmit the terminal apparatus information to the web server 140 in response to the request.

As described above, the terminal apparatus information is stored in the hub site 120, and so the hub site 120 may transmit the terminal apparatus information to the server 140 even though it is impossible to communicate with the terminal apparatus 100 because the terminal apparatus 100 is powered off.

The web server 140 may be a server which provides a content sale website which sells a variety of paid content or alternately may provide content free of charge. The web server 140 supports a function of giving a content gift to another terminal apparatus through the content sale website. More specifically, the web server 140 may provide a gift function, which enables a user to purchase predetermined content from the content sale website using the PC 160 and to download the purchased content using the terminal apparatus 100. Herein, a term 'gift function' is used merely for convenience of description, and thus there is no limitation to such a term.

Accordingly, the user may access the content sale website provided by the web server 140 and purchase predetermined content using the PC 160, so that the terminal apparatus 100 may download the predetermined content.

The web server 140 receives content information regarding sellable content from the PMS 200. Additionally, the web server 140 combines the received content information with information regarding the content sale website.

The web server 140 receives from the PC 160 a purchase request and a download request for predetermined content, based on the terminal apparatus information. If the user completely purchases the predetermined content using the PC 160, the web server 140 may transmit the download request for the predetermined content to the PMS 200.

In this situation, when it is impossible to communicate with the terminal apparatus 100, if a retrieval request to retrieve the terminal apparatus information is received from the PC 160, the web server 140 requests the hub site 120 to retrieve the terminal apparatus information. Subsequently, the web server 140 receives the terminal apparatus information from the hub site 120, and then provides the received terminal apparatus information to the PC 160.

The web server 140 may also transmit the download authority information along with the download request to the PMS 200. Herein, the download authority information enables the terminal apparatus 100 to download the predetermined content.

As described above, the web server 140 may provide the content sale website which sells a variety of paid content or alternately, may provide content free of charge. In addition, the web server 140 may receive the terminal apparatus information from the hub site 120, and may then send the received apparatus information to the PC 160, even though it is impossible to communicate with the terminal apparatus 100.

The PC 160 is used to access the web server 140 and purchase content through the content sale website. Accordingly, it is possible for a user of the PC 160 to access the content sale website provided by the web server 140 using the PC 160, and to purchase desired content or to give a content gift to the terminal apparatus 100.

The PMS 200 may be a server which manages content information regarding a variety of content (namely, products for sale). Accordingly, the PMS 200 receives the content information from the content provider 180, manages the received content information, and transmits required content information to the web server 140.

Additionally, the PMS 200 receives a download request for predetermined content purchased by the user through the web server 140, and transmits the received download request to the terminal apparatus 100.

In this situation, if it is impossible to communicate with the terminal apparatus 100, the PMS 200 continues to transmit the download request to the terminal apparatus 100 at regular intervals until the terminal apparatus 100 responds to the download request.

The content provider 180 may be a server, which stores and manages content and provides the content over the Internet. The content provider 180 provides content information to the web server 140, and transmits content to the terminal apparatus 100. In more detail, if a request to download predetermined content is received from the terminal apparatus 100, the content provider 180 may transmit the predetermined content to the terminal apparatus 100.

Through the process described above, the content download system having the PMS 200 may also provide a content download service, so that the predetermined content purchased through the PC 160 may be downloaded to the terminal apparatus 100. Additionally, the terminal apparatus information may be stored in and provided by the hub site 120, and thus the content download system may make it possible to purchase content through the PC 160, and download the content to the terminal apparatus 100, even though the terminal apparatus 100 is in an incommunicable state. In other words, if it is impossible to communicate with the terminal apparatus 100, the content download system may purchase and download content in an asynchronous manner, that is, in a predetermined time interval, rather than in real-time.

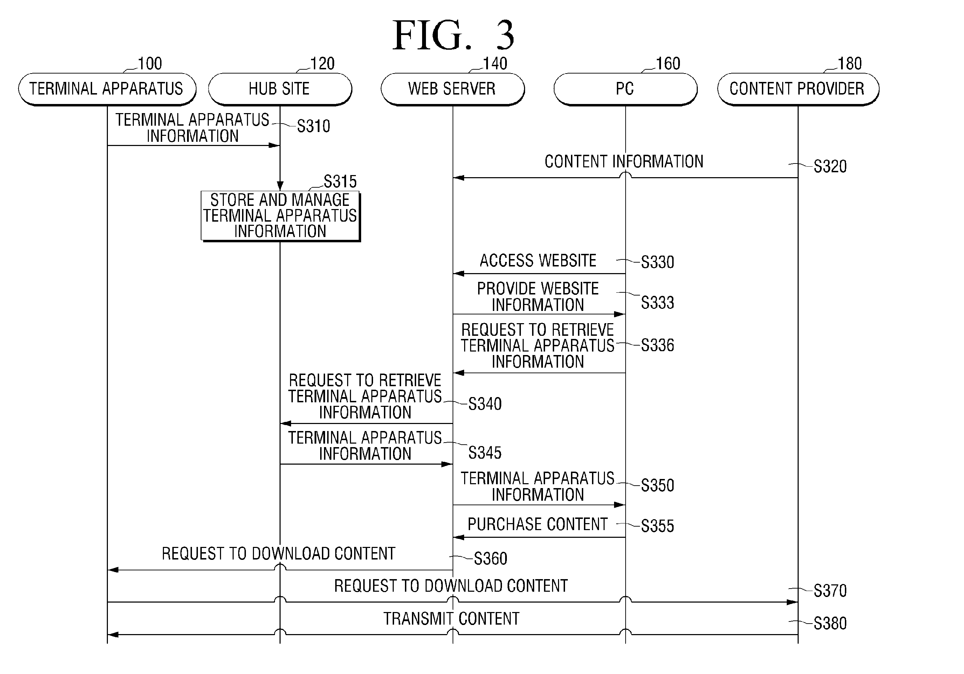

Hereinafter, a method for providing a content download service is now described with reference to FIG. 3. FIG. 3 is a flowchart explaining the method for providing a content download service according to an exemplary embodiment.

In FIG. 3, the terminal apparatus 100 transmits terminal apparatus information to the hub site 120 (operation S310). Herein, the terminal apparatus information comprises information regarding the specification of the terminal apparatus 100, and information regarding the current status of the terminal apparatus 100, but is not limited thereto. In more detail, the terminal apparatus information may comprise at least one of model information, serial number information, firmware version information, screen size information, memory available space information, codec information, definition information, download option information, and download lock setting information which are associated with the terminal apparatus 100, but is not limited thereto.

In operation S310, the terminal apparatus 100 transmits the terminal apparatus information to the hub site 120 at regular intervals, for example every 1 hour. Additionally, if the terminal apparatus information is changed, the terminal apparatus 100 may transmit the changed apparatus information to the hub site 120. For example, if the available storage space of the memory is changed due to the deletion or addition of content, the terminal apparatus 100 may transmit changed terminal apparatus information to the hub site 120. Additionally, the hub site 120 stores and manages the received terminal apparatus information (operation S315).

The content provider 180 transmits content information regarding a variety of content for sale to the web server 140 (operation S320). After receiving the content information, the web server 140 forms a content sale website based on the received content information.

Subsequently, if the PC 160 accesses the content sale website of the web server 140 (operation S330), the web server 140 provides the PC 160 with information regarding the content sale website (operation S333). Additionally, if the PC 160 sends a retrieval request to retrieve the terminal apparatus information to the web server 140 in order to give a content gift to the terminal apparatus 100 (operation S336), the web server 140 transmits the received retrieval request to the hub site 120 (operation S340).

In response to the retrieval request, the hub site 120 transmits the terminal apparatus information to the web server 140, and the web server 140 transmits the received terminal apparatus information to the PC 160 (operation S350). Accordingly, a user may check the terminal apparatus information through the PC 160. In particular, the terminal apparatus information is received through the hub site 120, and so the user may assess the content sale website and check the terminal apparatus information using the PC 160, even though the terminal apparatus 100 is in an incommunicable state.

Additionally, if the user completely purchases predetermined content using the PC 160 (operation S355), the web server 140 sends a download request for predetermined content to the terminal apparatus 100 (operation S360).

Subsequently, the terminal apparatus 100 sends the received download request to the content provider 180 (S370), and then the content provider 180 transmits the predetermined content to the terminal apparatus 100 (S380).

Through the process described above, the content download system may provide a content download service, so that the predetermined content purchased through the PC 160 may be downloaded to the terminal apparatus 100. Additionally, the terminal apparatus information may be stored in and provided by the hub site 120, and thus the content download system may make it possible to purchase content through the PC 160 to download the content to the terminal apparatus 100, even though the terminal apparatus 100 is in an incommunicable state. In other words, if it is impossible to communicate with the terminal apparatus 100, the content download system may purchase and download content in an asynchronous manner, that is, in a predetermined time interval, rather than in real-time.

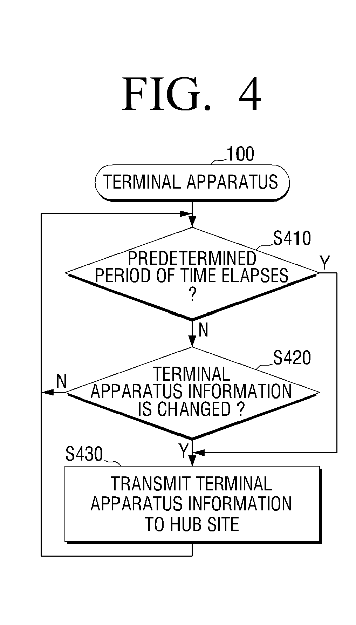

Hereinafter, operations of the terminal apparatus 100, the hub site 120 and the web server 140 are now described in detail with reference to FIGS. 4 to 6. FIG. 4 is a flowchart explaining the operation of the terminal apparatus 100 according to an exemplary embodiment.

The terminal apparatus 100 may transmit the terminal apparatus information to the hub site 120 in various ways. Referring to FIG. 4, the terminal apparatus 100 determines whether a predetermined period of time elapses (operation S410). If it is determined that the predetermined period of time elapses (operation S410-Y), the terminal apparatus 100 transmits the terminal apparatus information to the hub site 120 (operation S430).

Additionally, the terminal apparatus 100 determines whether the terminal apparatus information is changed (operation S420). If it is determined that the terminal apparatus information is changed (operation S420-Y), the terminal apparatus 100 transmits the terminal apparatus information to the hub site 120 (operation S430).

In other words, the terminal apparatus 100 may transmit the terminal apparatus information to the hub site 120 at regular intervals, or whenever the terminal apparatus information is changed.

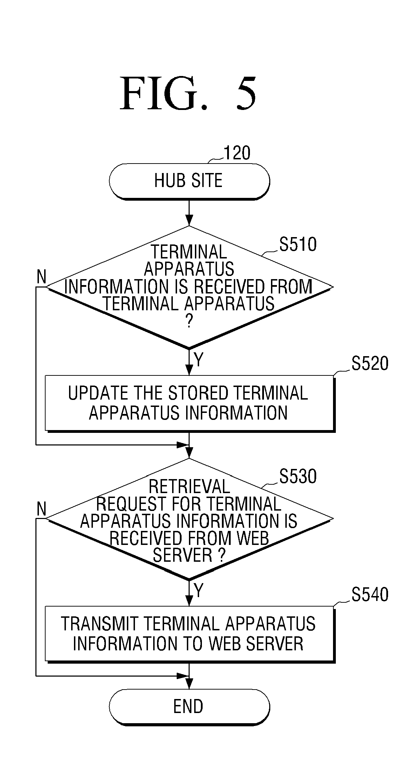

FIG. 5 is a flowchart explaining the operation of the hub site 120 according to an exemplary embodiment. The hub site 120 may receive the terminal apparatus information from the terminal apparatus 100, may store and manage the received terminal apparatus information, and may transmit the terminal apparatus information to the web server 140.

In more detail, the hub site 120 determines whether the terminal apparatus information is received from the terminal apparatus 100 (operation S510). If it is determined that the terminal apparatus information is received from the terminal apparatus 100 (operation S510-Y), the hub site 120 updates the currently stored terminal apparatus information based on the received terminal apparatus information (operation S520).

Additionally, the hub site 120 determines whether a retrieval request for the terminal apparatus information is received from the web server 140 (operation S530). If is determined that the retrieval request is received from the web server 140 (operation S530-Y), the hub site 120 transmits the terminal apparatus information to the web server 140 (operation S540).

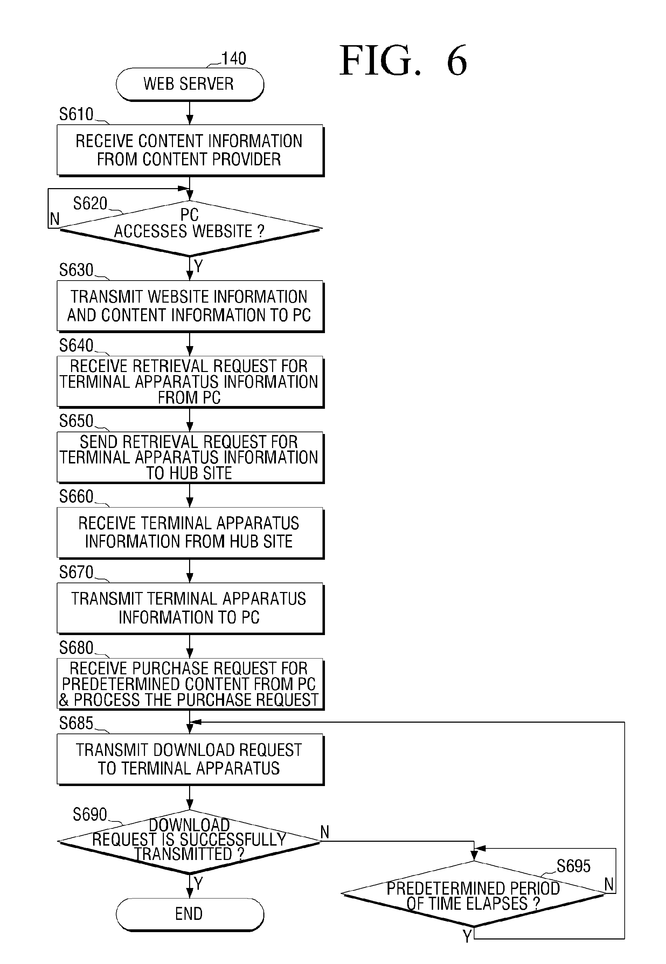

FIG. 6 is a flowchart explaining the operation of the web server 140 according to an exemplary embodiment. As described above, the web server 140 may be a server which provides a content sale website which sells a variety of paid content or, or alternatively, may provide content free of charge. The web server 140 supports a function of giving a content gift to another terminal apparatus through the content sale website. More specifically, the content sale website may provide a gift function, which enables a user to purchase predetermined content from the content sale website using the PC 160 and to download the purchased content using the terminal apparatus 100.

Referring to FIG. 6, the web server 140 receives content information regarding a variety of content for sale from the content provider 180 (operation S610). After receiving the content information, the web server 140 forms the content sale website based on the received content information.

Subsequently, if the PC 160 accesses the content sale website of the web server 140 (operation S620-Y), the web server 140 provides the PC 160 with the content information and information regarding the content sale website (operation S630). Additionally, the web server 140 receives a retrieval request to retrieve the terminal apparatus information from the PC 160 in order to give a content gift to the terminal apparatus 100 (S640), and transmits the received retrieval request to the hub site 120 (operation S650).

Next, the web server 140 receives the terminal apparatus information from the hub site 120 (operation S660), and transmits the received terminal apparatus information to the PC 160 (operation S670). Accordingly, a user may check the terminal apparatus information through the PC 160. In particular, the terminal apparatus information is received through the hub site 120, and so the user may assess the content sale website and to check the terminal apparatus information using the PC 160, even though the terminal apparatus 100 is in an incommunicable state.

Additionally, the web server 140 receives a purchase request for predetermined content from the PC 160, and processes the received purchase request (operation S680). Subsequently, the web server 140 transmits a download request for the predetermined content to the terminal apparatus 100 (operation S685).

The web server 140 determines whether the download request is successfully transmitted (operation S690). If it is determined that the download request was not successfully transmitted (operation S690-N), the web server 140 determines whether a predetermined period of time elapses (operation S695), and if so (operation S695-Y), re-transmits the download request to the terminal apparatus 100 (operation S685).

Through the process described above, the web server 140 may provide a function which enables a user to purchase predetermined content through the PC 160 and to download the purchased content using the terminal apparatus 100.

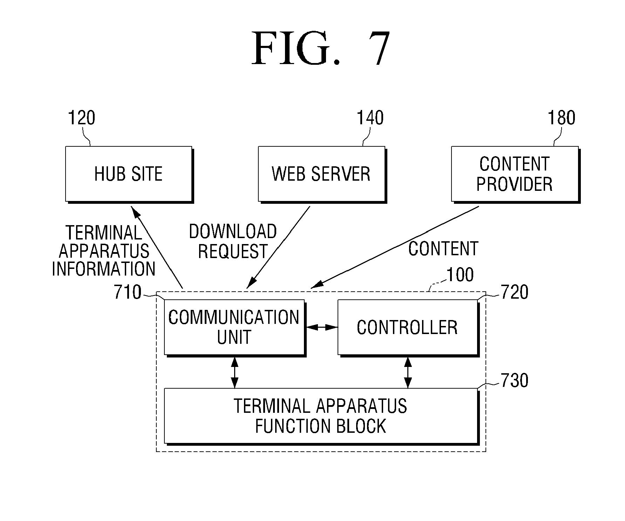

Hereinafter, the structure of the terminal apparatus 100 is now described briefly with reference to FIG. 7. FIG. 7 is a block diagram of the terminal apparatus 100 according to an exemplary embodiment. In FIG. 7, the terminal apparatus 100 comprises a communication unit 710, a controller 720 and a terminal apparatus function block 730.

The communication unit 710 may be communicably connected to an external server. In more detail, the communication unit 710 may be communicably connected to the hub site 120, the web server 140 and the content provider 180. Additionally, the communication unit 710 transmits the terminal apparatus information to the hub site 120, receives a download request from the web server 140, and receives content from the content provider 180. The communication unit 710 may be implemented as a wired communication module, such as a local area network (LAN), or as a wireless communication module, such as a wireless local area network (WLAN) or Bluetooth.

The controller 720 controls the terminal apparatus 100 to transmit the terminal apparatus information to the hub site 120. In more detail, under the control of the controller 720, the terminal apparatus information may be transmitted to the hub site 120 at regular intervals, or whenever the terminal apparatus information is changed.

Additionally, if a download request for predetermined content is received from the web server 140, the controller 720 controls the communication unit 710 to download the predetermined content from the content provider 180.

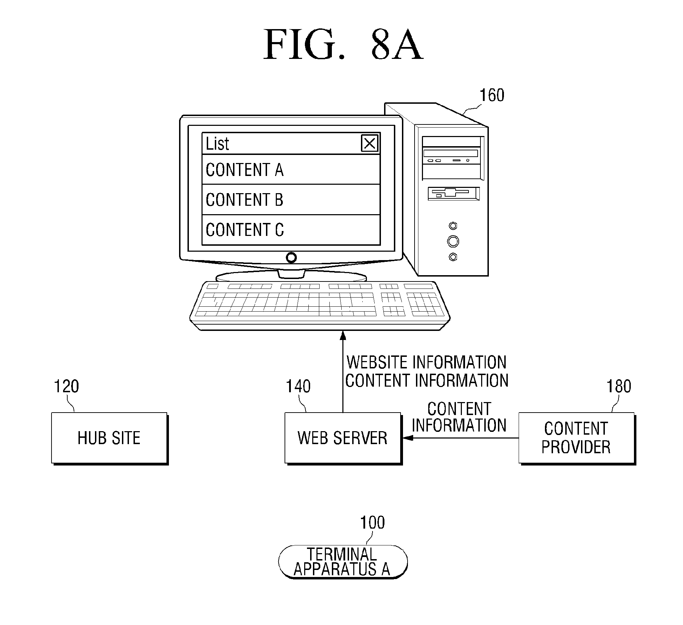

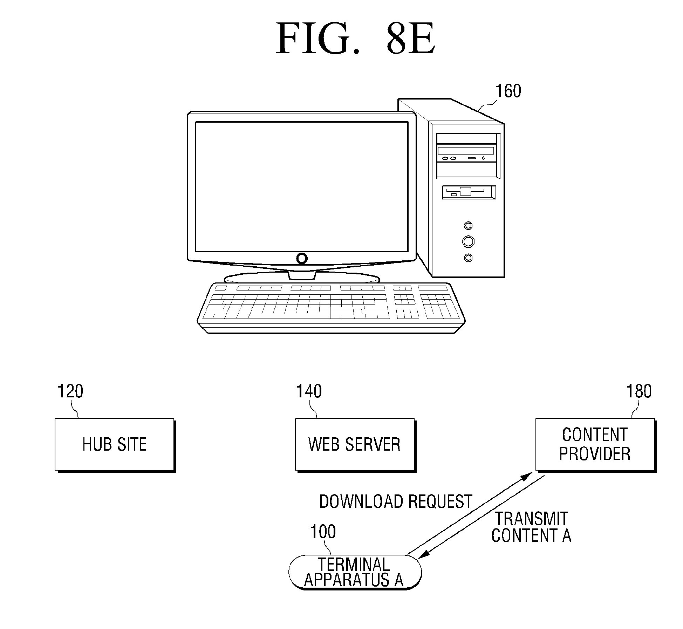

FIGS. 8A to 8E are views illustrating a content download process of a content download system according to an exemplary embodiment.

FIG. 8A illustrates a situation in which the PC 160 accesses the content sale website of the web server 140. In FIG. 8A, a screen of the PC 160 displays a content list containing a variety of content for sale (namely, content A, content B and content C). Content information regarding the content for sale is transmitted from the content provider 180 to the web server 140. Additionally, if the PC 160 accesses the web server 140, the web server 140 transmits website information and the content information to the PC 160. Accordingly, the PC 160 may display the content list as shown in FIG. 8A.

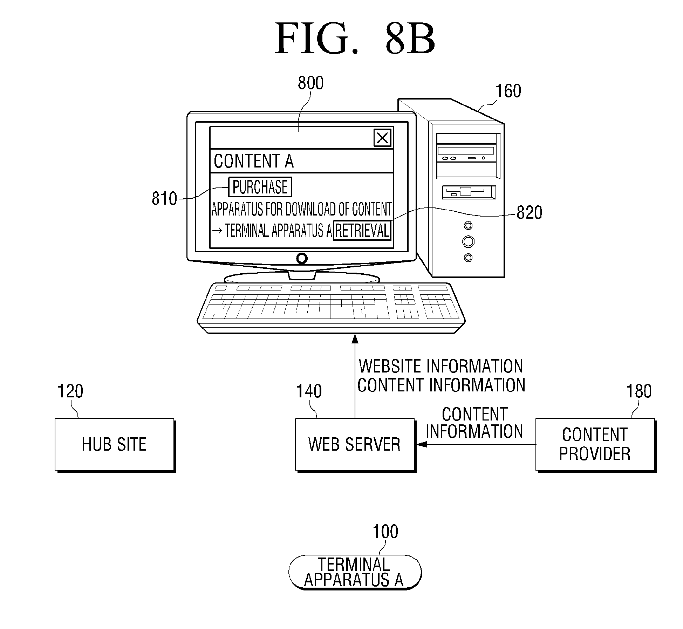

If a user selects content A from the content list shown in FIG. 8A, a content purchase window 800 by which a user can purchase content A is displayed on the screen of the PC 160, as shown in FIG. 8B. The content purchase window 800 shows a purchase icon 810, an apparatus for download of content A, and a retrieval icon 820.

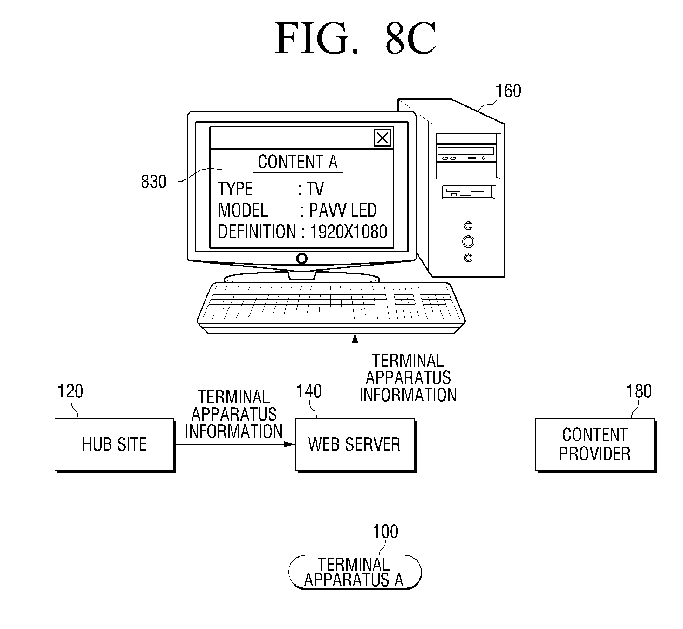

As shown in FIG. 8B, terminal apparatus A may be used to download content A. In this situation, if a user selects the retrieval icon 820, an apparatus information display window 830 appears to show information regarding terminal apparatus A on the screen of the PC 160, as shown in FIG. 8C. The web server 140 receives the information regarding terminal apparatus A from the hub site 120, and then transmits the received information to the PC 160. Accordingly, the PC 160 may display the apparatus information display window 830 even though it is impossible to communicate with the terminal apparatus A.

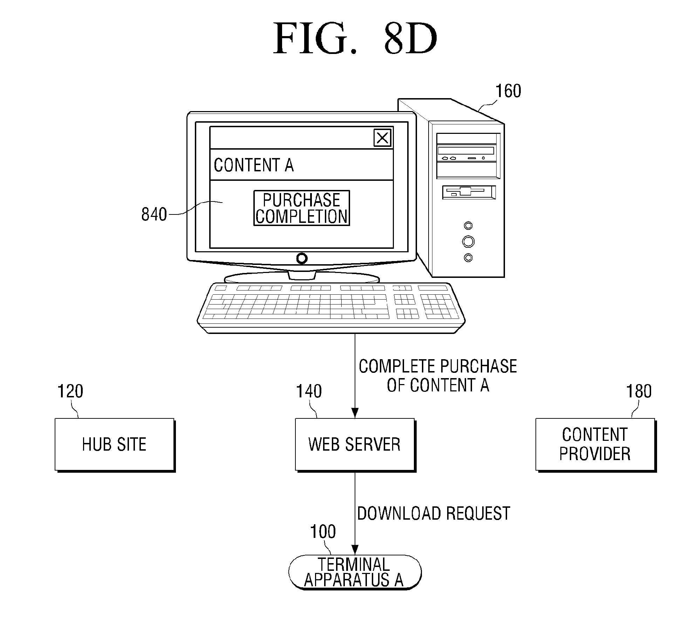

Alternatively, if the user selects the purchase icon 810, a purchase completion window 840 is displayed on the screen of the PC 160, as shown in FIG. 8D. After purchase of content A is completed through the PC 160, the web server 140 transmits a download request for content A to terminal apparatus A.

After receiving the download request, terminal apparatus A transmits the download request to the content provider 180. In response to the download request, the content provider 180 transmits content A to the terminal apparatus A.

Therefore, it is possible for the user to purchase content A through the PC 160 and download content A using the terminal apparatus A.

Content described in the exemplary embodiment may be any content capable of being played back by the terminal apparatus 100, for example movies, music, photos, texts or applications.

Additionally, the terminal apparatus 100 described in the exemplary embodiments may be implemented as any apparatus capable of playing back content. For example, the terminal apparatus 100 may be a television (TV), an MPEG Audio Layer-3 (MP3) player, a portable multimedia player (PMP), or a mobile phone, but is not limited thereto.

Furthermore, a server for receiving and managing the terminal apparatus information is designated as the hub site 120 in the exemplary embodiments, but this is merely exemplary for convenience of description. Accordingly, the exemplary embodiments are also applicable to any server capable of receiving and managing the terminal apparatus information, and there is no limitation to such a name.

According to exemplary embodiments, a method for providing a content download service and a terminal apparatus applying the method may be provided in which the terminal apparatus transmits terminal apparatus information to a first server, the first server transmits the received terminal apparatus information to a second server, and the second server receives a download request for predetermined content based on the received terminal apparatus information. Therefore, it is possible for a user to access the second server and check the terminal apparatus information to purchase content capable of being played back by the terminal apparatus, even though the terminal apparatus is powered off.

The foregoing exemplary embodiments and advantages are merely exemplary and are not to be construed as limiting. The present teaching can be readily applied to other types of apparatuses. Also, the description of the exemplary embodiments are intended to be illustrative, and not to limit the scope of the claims, and many alternatives, modifications, and variations will be apparent to those skilled in the art.

## Claims

1. A method for providing a content download service in a content download system including a first server, a second server and a first terminal which are communicable to each other, the method comprising:
transmitting by the first terminal, terminal information to the first server;
transmitting by the first server, the terminal information to the second server;
receiving by the second server, a download request to download a predetermined content based on the terminal information;
transmitting by the second server, the download request to the first terminal; and
downloading by the first terminal, the predetermined content in response to the download request.

2. The method as claimed in claim 1, wherein the transmitting by the second server comprises transmitting by the second server, the download request to the first terminal at regular intervals until the first terminal responds to the download request, if the first terminal does not respond to an initially transmitted download request.

3. The method as claimed in claim 1 or 2, wherein the receiving comprises the second server receiving from a second terminal, the download request and a purchase request to purchase the predetermined content, and
the transmitting by the second server, comprises the second server transmitting the download request to the first terminal, if purchase of the predetermined content is complete in the second server.

4. The method as claimed in any one of claims 1 to 3, wherein the transmitting by the first terminal, comprises transmitting by the first terminal, the terminal information to the first server at regular intervals.

5. The method as claimed in any one of claims 1 to 4, wherein the transmitting by the first terminal, comprises transmitting by the first terminal, the terminal information to the first server when the terminal information is changed.

6. The method as claimed in any one of claims 1 to 5, wherein the transmitting by the first server, comprises:
sending by the second server, a retrieval request to retrieve the terminal information, to the first server, if there is no initial communication with the first terminal; and
transmitting by the first server, the terminal information to the second server in response to the retrieval request.

7. The method as claimed in any one of claims 1 to 6, wherein the terminal information comprises at least one of model information, serial number information, firmware version information, screen size information, memory available space information, codec information, definition information, download option information, and download lock setting information which are associated with the first terminal.

8. The method as claimed in any one of claims 1 to 7, wherein the first terminal is one of a plurality of terminals, and the first server stores and manages information regarding the plurality of terminals, and provides the stored information to external devices.

9. The method as claimed in any one of claims 1 to 8, wherein the second server is a web server which provides a website for selling a variety of paid content or providing content free of charge, using the terminal information.

10. The method as claimed in any one of claims 1 to 9, wherein the transmitting by the second server, comprises transmitting by the second server, the download request with download authority information for the predetermined content, to the first terminal.

11. The method as claimed in any one of claims 1 to 10, wherein the downloading comprises downloading by the first terminal, the predetermined content from a content provider.

12. The method as claimed in any one of claims 1 to 11, further comprising:
transmitting by the second server, the terminal information to a second terminal.

13. The method as claimed in any one of claims 1 to 12, wherein the transmitting by the second server, comprises:
transmitting by the second server, the download request to a third server which manages product information; and
transmitting by the third server, the download request to the first terminal.

14. A terminal, which is communicable with a server, comprising:
a communication unit which is communicably connected to the server; and
a controller which controls the terminal to transmit terminal information to the server.

15. The terminal as claimed in claim 14, wherein, when a download request to download a predetermined content is received from an external server, the controller controls the communication unit to download the predetermined content.
